# EUROPÄISCHE PATENTANMELDUNG

(11) **EP 0 798 320 A2**
(43) Veröffentlichungstag der Anmeldung: **01.10.1997**
(21) Anmeldenummer: 97105076.0
(22) Anmeldetag: 26.03.1997
(51) Int. Cl.: C08F 222/00, C08F 220/28, C08F 220/38, C08F 2/26

(54) **Ternäre Copolymere**

(30) Priorität: 26.03.1996 JP 97531/96
(71) Anmelder: NOF CORPORATION, Tokyo (JP)
(72) Erfinder: Itoh, Akinori, Kawasaki, Kanagawa (JP); Honda, Susumu, Tokyo (JP); Kinoshita, Seigo, Tokyo (JP)
(74) Vertreter: Türk, Gille, Hrabal, Leifert

(57) **Abstract**

A ternary copolymer which comprises (a) unit of a polyoxyalkylene alkenyl ether, (b) unit of alkenylsulfonic acid, and (c) unit of a maleic acid compound as essential monomer units; contains essential monomer units (a), (b) and (c) in amounts satisfying a relation: {(a) + (b)} : (c) = 3 : 7 to 7 : 3 by mol, and a relation: (a) : (b) = 1 : 5 to 99 : 1 by mol; and has a weight-average molecular weight of 500 to 100,000.

The copolymer is stable against hydrolysis and useful as a macromolecular surfactant.

## Beschreibung

### FIELD OF THE INVENTION

The present invention relates to a ternary copolymer. More particularly, the present invention relates to a ternary copolymer having a polyoxyalkylene group, sulfonic acid group, and carboxyl group in side chains of the molecule.

### PRIOR ART OF THE INVENTION

For applications such as scale inhibitors, chelating agents, and dispersants, copolymers having carboxyl group alone in the molecule, such as copolymers derived from acrylic acid or maleic acid, and copolymers having sulfonic acid group alone in the molecule, such as salts of polystyrenesulfonate, have heretofore been used. However, properties of such copolymers having a single type of the functional group alone are not satisfactory, and various attempts have been made to improve the properties. For example, in Japanese Patent Application Laid-Open No. Showa 59(1984)-176312, a copolymer of polyoxyalkylene monoallyl ether and a maleic acid monomer is disclose as a copolymer having a significant ability to prevent formation of scale. However, the copolymers having both polyoxyalkylene group and carboxyl group occasionally shows insufficient property as a macromolecular surfactant. Therefore, copolymers having other functional groups have been developed.

For example, in Japanese Patent Application Laid-Open No. Heisei 7(1994)-126054, a copolymer having a polyoxyalkylene group, carboxyl group, and sulfonic acid group is proposed, and a copolymer of a monoester obtained by reaction of maleic anhydride with polyethylene glycol and sodium styrenesulfonate is disclosed. However, because the polyoxyalkylene group in the sides chain is bonded to the main chain through an ester bond in this copolymer, the polyoxyalkylene group tends to be removed by hydrolysis of the ester bond, and it is difficult that the characteristic property of this copolymer is fully exhibited.

### SUMMARY OF THE INVENTION

Accordingly, the present invention has an object of providing a ternary copolymer having a polyoxyalkylene group, sulfonic acid group, and carboxyl group and stable against hydrolysis.

As the result of extensive studies conducted by the present inventors to solve the above problems, it was discovered that a copolymer which has a polyoxyalkylene group, sulfonic acid group, and carboxyl group in the molecule and can keep the polyoxyalkylene group with stability without elimination by hydrolysis can be obtained by using a specific polyoxyalkylene compound as the monomer. The present invention has been completed on the basis of the discovery.

Accordingly, the present invention provides:
(1) A ternary copolymer which comprises, as essential monomer units,
   (a) unit of a polyoxyalkylene compound represented by general formula [1]:

      R¹O(AO)ₙR² [1]

      (wherein R¹ represents an alkenyl group having 2 to 5 carbon atoms, R² represents hydrogen, a hydrocarbon group having 1 to 40 carbon atoms, or an acyl group having 2 to 18 carbon atoms, AO represents an oxyalkylene group having 2 to 18 carbon atoms, and n represents average number of added oxyalkylene group by mol which is 1 to 500),
   (b) unit of a sulfonic acid compound represented by general formula [2]:

      R³SO₃M¹ [2]

      (wherein R³ represents an alkenyl group having 2 to 5 carbon atoms or an alkenylphenyl group having 8 or 9 carbon atoms, M¹ represents hydrogen, an alkali metal, an alkaline earth metal, or ammonium group which is unsubstituted or substituted with an organic group), and
   (c) unit of a maleic acid compound selected from the group consisting of maleic anhydride, maleic acid, and salts of maleic acid,
      contains essential monomer units (a), (b) and (c) in amounts satisfying a relation: {(a) + (b)} : (c) = 3 : 7 to 7 : 3 by mol, and a relation: (a) : (b) = 1 : 5 to 99 : 1 by mol, and
      has a weight-average molecular weight of 500 to 100,000;
(2) A ternary copolymer which is represented by general formula [3]: 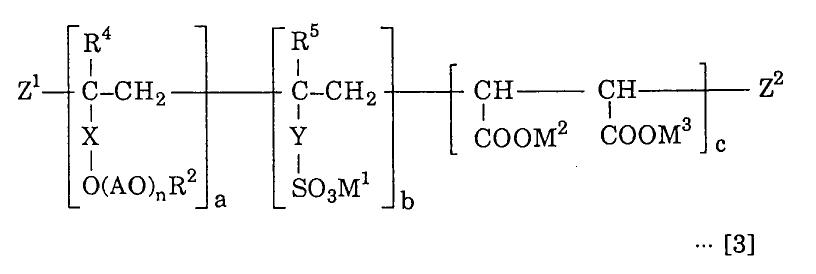 wherein R² represents hydrogen, a hydrocarbon group having 1 to 40 carbon atoms, or an acyl group having 2 to 18 carbon atoms, R⁴ and R⁵ represent each hydrogen or methyl group, AO represents an oxyalkylene group having 2 to 18 carbon atoms, n represents average number of added oxyalkylene group by mol which is 1 to 500, X represents a hydrocarbon group represented by CₘH₂ₘ wherein m represents a number of 0 to 3, Y represents a phenylene group or a hydrocarbon group represented by CₚH₂ₚ wherein p represents a number of 0 to 3, M¹, M², and M³ represent each hydrogen, an alkali metal, an alkaline earth metal, or ammonium group which is unsubstituted or substituted with an organic group, Z¹ and Z² represent each hydrogen or a residue group which is bonded to an end of the copolymer by initiation of polymerization or chain transfer, a, b, and c represent each number of respective constituting units by mol, a being 1 to 100, b being 1 to 100, and c being 1 to 100, the constituting units are bonded to each other in a random order, a, b and c satisfy a relation: {a + b} : c = 3 : 7 to 7 : 3 by mol, and a and b satisfy a relation: a : b = 1 : 5 to 99 : 1 by mol; and
(3) A ternary copolymer represented by general formula [4]: 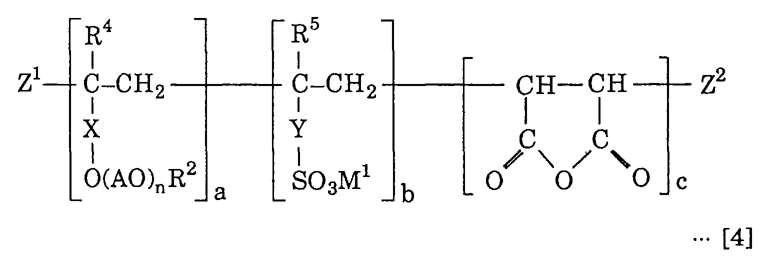 wherein R² represents hydrogen, a hydrocarbon group having 1 to 40 carbon atoms, or an acyl group having 2 to 18 carbon atoms, R⁴ and R⁵ represent each hydrogen or methyl group, AO represents an oxyalkylene group having 2 to 18 carbon atoms, n represents average number of added oxyalkylene group by mol which is 1 to 500, X represents a hydrocarbon group represented by CₘH₂ₘ wherein m represents a number of 0 to 3, Y represents a phenylene group or a hydrocarbon group represented by CₚH₂ₚ wherein p represents a number of 0 to 3, M¹ represents hydrogen, an alkali metal, an alkaline earth metal, or ammonium group which is unsubstituted or substituted with an organic group, Z¹ and Z² represent each hydrogen or a residue group which is bonded to an end of the copolymer by initiation of polymerization or chain transfer, a, b, and c represent each number of respective constituting units by mol, a being 1 to 100, b being 1 to 100, and c being 1 to 100, the constituting units are bonded to each other in a random order, a, b and c satisfy a relation: {a + b} : c = 3 : 7 to 7 : 3 by mol, and a and b satisfy a relation: a : b = 1 : 5 to 99 : 1 by mol.

### DETAILED DESCRIPTION OF THE INVENTION

The ternary copolymer of the present invention comprises, as the structural unit having a polyoxyalkylene group, unit (a) of polyoxyalkylene compound represented by general formula [1]:

R¹O(AO)ₙR² [1]

In general formula [1], R¹ represents an alkenyl group having 2 to 5 carbon atoms, R² represents hydrogen, a hydrocarbon group having 1 to 40 carbon atoms, or an acyl group having 2 to 18 carbon atoms, AO represents an oxyalkylene group having 2 to 18 carbon atoms, and n represents an average number of the added oxyalkylene group by mol which is 1 to 500. The ternary copolymer of the present invention may comprise a single type of the unit represented by general formula [1] or a plurality of types of the unit represented by general formula [1] having different R¹, R², AO, and n.

Examples of the alkenyl group having 2 to 5 carbon atoms which is represented by R¹ in general formula [1] include vinyl group, isopropenyl group, allyl group, methallyl group, 3-butenyl group, 2-methyl-1-butenyl group, 3-methyl-1-butenyl group, 2-methyl-3-butenyl group, and 3-methyl-3-butenyl group. Among these groups, allyl group and methallyl group are preferable.

Examples of the hydrocarbon group having 1 to 40 carbon atoms which is represented by R² in general formula [1] include methyl group, ethyl group, propyl group, isopropyl group, butyl group, isobutyl group, sec-butyl group, tert-butyl group, pentyl group, isopentyl group, neopentyl group, hexyl group, heptyl group, octyl group, nonyl group, decyl group, undecyl group, dodecyl group, isotridecyl group, tetradecyl group, hexadecyl group, isocetyl group, octadecyl group, isostearyl group, oleyl group, octyldodecyl group, docosyl group, decyltetradecyl group, benzyl group, cresyl group, butylphenyl group, dibutylphenyl group, octylphenyl group, nonylphenyl group, dodecylphenyl group, dioctylphenyl group, and dinonylphenyl group.

Examples of the acyl group having 2 to 18 carbon atoms which is represented by R² in general formula [1] include acetyl group, propionyl group, butyryl group, isobutyryl group, valeryl group, isovaleryl group, pivaloyl group, hexanoyl group, octanoyl group, lauroyl group, palmitoyl group, and stearoyl group.

Examples of the oxyalkylene group having 2 to 18 carbon atoms which is represented by AO in general formula [1] include oxyethylene group, oxypropylene group, oxybutylene group, oxytetramethylene group, oxydodecylene group, oxytetradecylene group, oxyhexadecylene group, and oxyoctadecylene group. A single type of the oxyalkylene group or two or more types of the oxyalkylene group may be contained. When two or more types of the oxyalkylene group are contained, the oxyalkylene groups may be arranged randomly or may form blocks. The average number of added oxyalkylene group by mol represented by n is 1 to 500. When n is larger than 500, the polyoxyalkylene compound represented by general formula [1] has an excessively high viscosity, and there is the possibility that the production becomes difficult.

The ternary copolymer of the present invention comprises, as the structural unit having sulfonic acid group, unit (b) of sulfonic acid compound represented by general formula [2]:

R³SO₃M¹ [2]

In general formula [2], R³ represents an alkenyl group having 2 to 5 carbon atoms or an alkenylphenyl group having 8 or 9 carbon atoms, and M¹ represents hydrogen, an alkali metal, an alkaline earth metal, or ammonium group which is unsubstituted or substituted with an organic group. The ternary copolymer of the present invention may comprise a single type of the unit represented by general formula [2] or a plurality of types of the unit represented by general formula [2] having different R³ and M¹.

Examples of the alkenyl group having 2 to 5 carbon atoms which is represented by R³ in general formula [2] include vinyl group, isopropenyl group, allyl group, methallyl group, 3-butenyl group, 2-methyl-1-butenyl group, 3-methyl-1-butenyl group, 2-methyl-3-butenyl group, and 3-methyl-3-butenyl group. Examples of the alkenylphenyl group having 8 or 9 carbon atoms include vinylphenyl group and isopropenylphenyl group.

Examples of the alkali metal represented by M¹ in general formula [2] include lithium, sodium, and potassium. Examples of the alkaline earth metal include calcium and magnesium. When M¹ represents an alkaline earth metal, M¹ actually represents a fictitious alkaline earth metal which is expressed as Ca_{1/2}, Mg_{1/2}, or the like, and one atom of an alkaline earth metal is actually bonded to two sulfonic acid groups. Examples of the ammonium group represented by M¹ which is unsubstituted or substituted with an organic group include ammonium group; alkanolammonium groups, such as 2-hydroxyethylammonium group, di(2-hydroxyethyl)ammonium group, and tri(2-hydroxyethyl)-ammonium group; alkylammonium groups, such as methylammonium group, dimethylammonium group, trimethylammonium group, ethylammonium group, diethylammonium group, and triethylammonium group; aromatic ammonium groups, such as anilinium group and benzyldimethylammonium group; and heterocyclic ammonium groups, such as pyridinium group and thiazolinium group.

The ternary copolymer of the present invention comprises unit (c) of a maleic acid compound which is selected from the group consisting of maleic anhydride, maleic acid, or salts of maleic acid. The ternary copolymer of the present invention may comprise a single type of the unit of a maleic acid compound or may be a copolymer comprising a plurality of types of the unit of a maleic acid compound. Examples of the salt of maleic acid include alkali metal salts of maleic acid, such as monolithium maleate, dilithium maleate, monosodium maleate, disodium maleate, monopotassium maleate, and dipotassium maleate; alkaline earth metal salts of maleic acid, such as calcium maleate and magnesium maleate; ammonium salts of maleic acid, such as monoammonium maleate and diammonium maleate; alkylamine salts of maleic acid, such as monomethylammonium maleate, bismonomethylammonium maleate, monodimethylammonium maleate, and bisdimethylammonium maleate; and alkanolamine salts of maleic acid, such as 2-hydroxyethylammonium maleate, bis-2-hydroxyethylammonium maleate, di(2-hydroxyethyl)ammonium maleate, and bisdi(2-hydroxyethyl)ammonium maleate.

The ternary copolymer of the present invention may comprise other structural units in addition to essential monomer units (a), (b), and (c) where necessary. For providing a copolymer with such other structural units, monomers copolymerizable with the compound represented by general formula [1], the compound represented by general formula [2], and the maleic acid compound can be copolymerized. The obtained copolymer is a copolymer having four or five types of structural unit. However, in the present invention, copolymers comprising essential monomer units (a), (b), and (c) including copolymers having four or more types of structural unit are all referred to as ternary copolymers. Examples of the monomer copolymerizable with the compound represented by general formula [1], the compound represented by general formula [2], and the maleic acid compound include styrene, vinyl acetate, acrylonitrile, methacrylonitrile, acrylamide, methacrylamide, acrylic acid, methacrylic acid, methyl acrylate, and methyl methacrylate.

The ternary copolymer of the present invention can easily be obtained by polymerizing the polyoxyalkylene compound represented by general formula [1], the sulfonic acid compound represented by general formula [2], and the maleic acid compound by a solution process in water, in an organic solvent, or in a mixed solvent containing water and a hydrophilic organic solvent or by a bulk process without using any solvent. When a compound represented by general formula [1] in which R² represents hydrogen is used and maleic anhydride is used as the maleic acid compound, water or a protic organic solvent must be used as the solvent of copolymerization. When the copolymerization is conducted without using the solvent, gel is formed during the reaction, and the desired copolymer cannot be obtained. In other cases, copolymerization can be conducted without using any solvent or by using a suitably selected solvent. When a solvent is used, examples of the solvent include protic organic solvents and aprotic organic solvents. Examples of the protic organic solvent include alcohols, such as methanol, ethanol, n-propanol, isopropanol, n-butanol, sec-butanol, 2-methoxyethanol, and 2-ethoxyethanol; diols, such as ethylene glycol and propylene glycol; and carboxylic acids, such as formic acid and acetic acid. Examples of the aprotic organic solvent include aromatic hydrocarbons, such as benzene, toluene, and xylene; aliphatic hydrocarbons, such as cyclohexane, n-hexane, and n-octane; ketones, such as acetone and methyl ethyl ketone; ethers, such as diethyl ether, diisopropyl ether, diphenyl ether, tetrahydrofuran, and dioxane; halogenated hydrocarbons, such as dichloromethane, chloroform, and carbon tetrachloride; acetonitrile; N,N-dimethylformamide (DMF); and dimethylsulfoxide (DMSO).

As the polymerization initiator used for copolymerization by using an organic solvent or without using any solvent, an organic peroxide polymerization initiator, such as benzoyl peroxide, or an azo polymerization initiator, such as 2,2'-azobisisobutyronitrile, can be used. When the copolymerization is conducted in water, a polymerization initiator soluble in water can be used. Examples of the polymerization initiator soluble in water include hydroperoxides, such as hydrogen peroxide and tert-butyl hydroperoxide; persulfates, such as potassium persulfate; and azo compounds, such as 2,2'-azobis(2-methylpropionamidine) dihydrochloride. A mixed solvent containing a hydrophilic organic solvent and water can also be used as the solvent. When a mixed solvent is used, a suitable polymerization initiator can be selected from the above polymerization initiators.

A part or all of the units of maleic anhydride in the obtained copolymer may be hydrolyzed to form units of maleic acid by ring opening where necessary. A part or all of the units of maleic acid may be neutralized by an alkali where necessary. Examples of the alkali used for the neutralization include hydroxides, carbonates, and hydrogencarbonates of alkali metals, such as lithium, sodium, and potassium; hydroxides of alkaline earth metals, such as magnesium and calcium; alkanolamines, such as monoethanolamine, diethanolamine, and triethanolamine; alkylamines, such as methylamine, dimethylamine, trimethylamine, ethylamine, diethylamine, and triethylamine; and ammonia. A single type or a mixture of two or more types of the alkali can be used.

As for the relative amounts of the unit of a polyoxyalkylene compound (a) represented by general formula [1], the unit of a sulfonic acid compound (b) represented by general formula [2], and the unit of a maleic acid compound (c) in the ternary copolymer of the present invention, (a), (b) and (c) satisfy a relation: {(a) + (b)} : (c) = 3 : 7 to 7 : 3, preferably 4 : 6 to 6 : 4, and (a) and (b) satisfy a relation: (a) : (b) = 1 : 5 to 99 : 1, preferably 1 : 2 to 10 : 1, wherein (a), (b), and (c) represent the amounts by mol of the unit of a polyoxyalkylene compound (a), the unit of a sulfonic acid compound (b), and the unit of a maleic acid compound (c), respectively. When the relative amounts of the monomer units are outside these ranges, there is the possibility that the properties of the ternary copolymer as a macromolecular surfactant are unbalanced.

In the ternary copolymer of the present invention, the weight-average molecular weight is 500 to 100,000, preferably 2,000 to 50,000, more preferably 5,000 to 20,000. When the weight-average molecular weight is less than 500, there is the possibility that the satisfactory property as the macromolecular surfactant cannot be obtained. When the weight-average molecular weight is more than 100,000, the ternary copolymer has an excessively large viscosity, and there is the possibility that the production is not easily conducted.

The ternary copolymer of the present invention can also has a structure represented by general formula [3] or general formula [4].

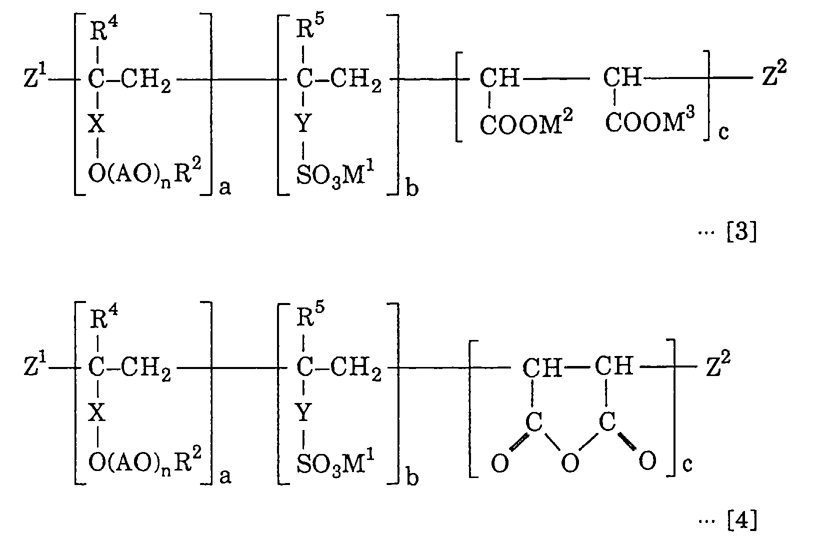

In general formulae [3] and [4], R² represents hydrogen, a hydrocarbon group having 1 to 40 carbon atoms, or an acyl group having 2 to 18 carbon atoms, R⁴ and R⁵ represent each hydrogen or methyl group, AO represents an oxyalkylene group having 2 to 18 carbon atoms, n represents an average number of added oxyalkylene group by mol which is 1 to 500, X represents a hydrocarbon group represented by CₘH₂ₘ wherein m represents a number of 0 to 3, Y represents a phenylene group or a hydrocarbon group represented by CₚH₂ₚ wherein p represents a number of 0 to 3, M¹ represents hydrogen, an alkali metal, an alkaline earth metal, or ammonium group which is unsubstituted or substituted with an organic group, Z¹ and Z² represent- each hydrogen or a residue group which is bonded to an end of the copolymer by initiation of polymerization or chain transfer, a, b, and c represent each number of respective constituting units by mol, a being 1 to 100, b being 1 to 100, and c being 1 to 100, and the constituting units are bonded to each other in a random order. In general formula [3], M² and M³ represent each hydrogen, an alkali metal, an alkaline earth metal, or ammonium group which is unsubstituted or substituted with an organic group.

Examples of the hydrocarbon group having 1 to 40 carbon atoms which is represented by R² in general formulae [3] and [4] include methyl group, ethyl group, propyl group, isopropyl group, butyl group, isobutyl group, sec-butyl group, tert-butyl group, pentyl group, isopentyl group, neopentyl group, hexyl group, heptyl group, octyl group, nonyl group, decyl group, undecyl group, dodecyl group, isotridecyl group, tetradecyl group, hexadecyl group, isocetyl group, octadecyl group, isostearyl group, oleyl group, octyldodecyl group, docosyl group, decyltetradecyl group, benzyl group, cresyl group, butylphenyl group, dibutylphenyl group, octylphenyl group, nonylphenyl group, dodecylphenyl group, dioctylphenyl group, and dinonylphenyl group.

Examples of the acyl group having 2 to 18 carbon atoms which is represented by R² in general formulae [3] and [4] include acetyl group, propionyl group, butyryl group, isobutyryl group, valeryl group, isovaleryl group, pivaloyl group, hexanoyl group, octanoyl group, lauroyl group, palmitoyl group, and stearoyl group.

Examples of the oxyalkylene group having 2 to 18 carbon atoms which is represented by AO in general formulae [3] and [4] include oxyethylene group, oxypropylene group, oxybutylene group, oxytetramethylene group, oxydodecylene group, oxytetradecylene group, oxyhexadecylene group, and oxyoctadecylene group. A single type of the oxyalkylene group or two or more types of the oxyalkylene group may be contained. When two or more types of the oxyalkylene group are contained, the oxyalkylene groups may be arranged randomly or may form blocks. The average number of added oxyalkylene group by mol represented by n is 1 to 500. When n is larger than 500, the polyoxyalkylene compound represented by general formula [3] or [4] has an excessively high viscosity, and there is the possibility that the production becomes difficult.

Examples of the hydrocarbon group represented by CₘH₂ₘ which is represented by X in general formulae [3] and [4] include methylene group, ethylene group, trimethylene group, and propylene group. When m=0, no hydrocarbon group is present between the polyoxyalkylene group and the main chain, and the polyoxyalkylene group is directly bonded to the main chain. Examples of the hydrocarbon group represented by CₚM₂ₚ which is represented by Y in general formulae [3] and [4] include methylene group, ethylene group, trimethylene group, and propylene group. When p=0, no hydrocarbon group is present between the sulfonic acid group and the main chain, and the sulfonic acid group is directly bonded to the main chain. When Y represents a phenylene group, the phenylene group may be any of o-phenylene group, m-phenylene group, and p-phenylene group.

Examples of the alkali metal represented by M¹ in general formulae [3] and [4] and by M² and M³ in general formula [3] include lithium, sodium, and potassium. Examples of the alkaline earth metal represented by M¹, M², and M³ include calcium and magnesium. When M¹, M², or M³ represents an alkaline earth metal, M¹, M², or M³ actually represents a fictitious alkaline earth metal which is expressed as Ca_{1/2}, Mg_{1/2}, or the like, and one atom of an alkaline earth metal is actually bonded to two sulfonic acid groups. Examples of the ammonium group represented by M¹, M², and M³ which is unsubstituted or substituted with an organic group include ammonium group; alkanolammonium groups, such as 2-hydroxyethylammonium group, di(2-hydroxyethyl)ammonium group, and tri(2-hydroxyethyl)ammonium group; alkylammonium groups, such as methylammonium group, dimethylammonium group, trimethylammonium group, ethylammonium group, diethylammonium group, and triethylammonium group; aromatic ammonium groups, such as anilinium group and benzyldimethylammonium group; and heterocyclic ammonium groups, such as pyridinium group and thiazolinium group. M¹, M², and M³ may represent the same metal or group, or different metals or groups.

In general formulae [3] and [4], Z¹ and Z² represent each hydrogen or a residue group which is bonded to an end of the copolymer by initiation of polymerization or chain transfer. For example, -OSO₃-group is bonded to an end of the copolymer when a persulfate is used as the polymerization initiator, and -C(CH₃)₂CN group is bonded to an end of the copolymer when 2,2'-azobisisobutyronitrile is used as the polymerization initiator. When acetonitrile is used as the solvent and chain transfer takes place between the reacting polymer and the solvent, -CH₂CN group is bonded to an end of the copolymer.

In the ternary copolymer represented by general formula [3] or [4] of the present invention, a, b, and c represent each number of respective constituting units by mol, wherein a is 1 to 100, b is 1 to 100, and c is 1 to 100. The constituting units are bonded to each other in a random order. When a, b, or c is more than 100, the ternary copolymer has an excessively high viscosity, and there is the possibility that the production is not easily conducted. When the constituting units are bonded to each other to form blocks, there is the possibility that the excellent property as a macromolecular surfactant cannot be obtained.

As for the relative amounts of the constituting units in the ternary copolymer represented by general formula [3] or [4] of the present invention, a, b and c satisfy a relation: {a + b} : c = 3 : 7 to 7 : 3, preferably 4 : 6 to 6 : 4 by mol, and a and b satisfy a relation: a : b = 1 : 5 to 99 : 1, preferably 1 : 2 to 10 : 1 by mol. When the relative amounts of the constituting units are outside these ranges, there is the possibility that the properties of the ternary copolymer as a macromolecular surfactant are unbalanced.

To summarize the advantages of the present invention, because the ternary copolymer of the present invention has a polyoxyalkylene group, sulfonic acid group, and carboxyl group, the ternary copolymer is stable against hydrolysis and can be used in a wide range of applications, such as dispersants for coating materials, agricultural chemicals, and pigments, chelating agents, builders for detergents, macromolecular surfactants, and emulsifiers.

The present invention is described in more detail with reference to examples in the following.

### Synthesis Example 1

Into an autoclave, 464 g of allyl alcohol and 0.8 g of potassium hydroxide were placed. The reaction was allowed to proceed by adding 1,077 g of ethylene oxide into the autoclave under a nitrogen atmosphere at 120°C under a gauge pressure of 0.5 to 3.0 kgf/cm² during 3 hours, and then the reaction was continued for 1 hour at 120°C. The residual ethylene oxide was removed from the reaction product under a reduced pressure. The obtained reaction product was neutralized with 6N hydrochloric acid. Water was removed from the neutralized product under a reduced pressure, and the precipitated salt was separated by filtration to obtain 1,525 g of polyoxyalkylene compound (A) shown in Table 1.

### Synthesis Example 2

Into an autoclave, 116 g of allyl alcohol and 0.6 g of potassium hydroxide were placed. The reaction was allowed to proceed by adding a mixture of 453 g of ethylene oxide and 597 g of propylene oxide into the autoclave under a nitrogen atmosphere at 120°C under a gauge pressure of 0.5 to 3.0 kgf/cm² during 4 hours, and then the reaction was continued for 1 hour at 120°C. The residual ethylene oxide and propylene oxide were removed from the reaction product under a reduced pressure. The obtained reaction product was neutralized with 6N hydrochloric acid. Water was removed from the neutralized product under a reduced pressure, and the precipitated salt was separated by filtration to obtain 1,143 g of polyoxyalkylene compound (B) shown in Table 1.

### Synthesis Example 3

Into an autoclave, 23 g of ethanol and 1.8 g of potassium hydroxide were placed. The reaction was allowed to proceed by adding 1,812 g of ethylene oxide into the autoclave under a nitrogen atmosphere at 120°C under a gauge pressure of 0.5 to 3.0 kgf/cm² during 6 hours, and then the reaction was continued for 1 hour at 120°C. The residual ethylene oxide was removed under a reduced pressure. To the obtained product, 56 g of potassium hydroxide was added, and the resultant mixture was treated under a reduced pressure at 120°C for 3 hours. Then, 57 g of allyl chloride was added at 120°C under a gauge pressure of 0.5 to 2.0 kgf/cm² during 2 hours, and then the reaction was continued for 2 hours at 120°C. The liquid part was taken out and neutralized with 6N hydrochloric acid. Water was removed from the neutralized product under a reduced pressure, and the precipitated salt was separated by filtration to obtain 1,727 g of polyoxyalkylene compound (C) shown in Table 1.

### Synthesis Example 4

By the same procedures as those conducted in Synthesis Example 3 except that 14.5 g of allyl alcohol in place of ethanol used in Synthesis Example 3, 1,420 g of ethylene oxide, 28 g of potassium hydroxide, and 71 g of methyl iodide in place of allyl chloride used in Synthesis Example 3 were used, reaction was carried out to obtain 1,309 g of polyoxyalkylene compound (D) shown in Table 1.

### Synthesis Example 5

By the same procedures as those conducted in Synthesis Example 3 except that 32 g of methanol in place of ethanol used in Synthesis Example 3, 1,346 g of ethylene oxide, 112 g of potassium hydroxide, and 115 g of allyl chloride were used, reaction was carried out to obtain 1,350 g of polyoxyalkylene compound (E) shown in Table 1.

### Synthesis Example 6

Into an autoclave, 120 g of acetic acid and 2.0 g of potassium hydroxide were placed. The reaction was allowed to proceed by adding 476 g of 1,2-butylene oxide into the autoclave under a nitrogen atmosphere at 120°C under a gauge pressure of 0.5 to 3.0 kgf/cm² during 3 hours, and then the reaction was continued for 2 hours at 120°C. The residual 1,2-butylene oxide was removed from the reaction product under a reduced pressure. Then, the reaction was allowed to proceed by adding 1,346 g of ethylene oxide to the obtained product under a nitrogen atmosphere at 120°C under a gauge pressure of 0.5 to 3.0 kgf/cm2 during 4 hours. After the reaction was continued for additional 1 hour at 120°C, the residual ethylene oxide was removed from the reaction product under a reduced pressure. To the obtained product, 224 g of potassium hydroxide was added, and the resultant mixture was treated under a reduced pressure at 120°C for 3 hours. Then, 256 g of methallyl chloride was added at 120°C under a gauge pressure of 0.5 to 2.0 kgf/cm² during 2 hours, and the reaction was continued for additional 2 hours at 120°C. The liquid part was taken out and neutralized with 6N hydrochloric acid. Water was removed from the neutralized product under a reduced pressure, and the precipitated salt was separated by filtration to obtain 1,521 g of polyoxyalkylene compound (F) shown in Table 1.

The structure, the hydroxyl number, and the degree of unsaturation of polyoxyalkylene compounds (A) to (F) obtained in Synthesis Examples 1 to 6 are shown in Table 1.

**Table 1**

| | polyoxyalkylene compound | | hydroxyl value (KOHmg/g) | degree of unsaturation (meq/g) |
|---|---|---|---|---|
| | No. | structure | | |
| Synthesis Example 1 | (A) | CH₂=CHCH₂O-(EO)₃-H | 295 | 5.26 |
| Synthesis Example 2 | (B) | CH₂=CHCH₂O-[(EO)₅/(PO)₅]-H | 98.7 | 1.76 |
| Synthesis Example 3 | (C) | CH₂=CHCH₂O-(EO)₈₀-C₂H₅ | 0.19 | 0.28 |
| Synthesis Example 4 | (D) | CH₂=CHCH₂O-(EO)₁₂₃-CH₃ | 0.11 | 0.18 |
| Synthesis Example 5 | (E) | CH₂=CHCH₂O-(EO)₃₀-CH₃ | 0.06 | 0.72 |
| Synthesis Example 6 | (F) | CH₂=C(CH₃)CH₂O-(EO)₁₅-(BO)₃-COCH₃ | 0.17 | 1.01 |
| Notes: EO: oxyethylene group; PO: oxypropylene group; BO: oxybutylene group. [/] shows random addition of the two units in [ ]. | | | | |

### Example 1

In a four-necked flask equipped with an inlet for nitrogen gas, a stirrer, a thermometer, and a condenser, 380 g of polyoxyalkylene compound (A) obtained in Synthesis Example 1, 288 g of sodium allylsulfonate, 487 g of maleic acid, and 228 g of ammonium persulfate as the polymerization initiator were placed by weighing, and 925 g of water was added to the mixture in the flask as the solvent. The reaction was allowed to proceed in the resultant solution under a nitrogen atmosphere at 50°C for 12 hours to obtain an aqueous solution of ternary copolymer (1) of polyoxyalkylene compound (A), sodium allylsulfonate, and maleic acid.

### Example 2

By the same procedures as those conducted in Example 1 except that 852 g of polyoxyalkylene compound (B) obtained in Synthesis Example 2, 103 g of sodium styrenesulfonate, 276 g of monosodium maleate, 135 g of potassium persulfate, and 910 g of water were used, polymerization was carried out to obtain an aqueous solution of ternary copolymer (2).

### Example 3

In a flask of the same type as that used in Example 1, 902 g of polyoxyalkylene compound (C) obtained in Synthesis Example 3, 72 g of sodium allylsulfonate, 98 g of maleic anhydride, and 3.28 g of 2,2'-azobisisobutyronitrile as the polymerization initiator were placed by weighing, and 360 g of toluene was added to the mixture in the flask as the solvent. The reaction was allowed to proceed in the resultant solution under a nitrogen atmosphere at 70°C for 3 hours. The reaction mixture was then heated to 80°C, and the reaction was continued at this temperature for 3 hours. Then, toluene used as the solvent was removed at 110°C under a reduced pressure (10 to 30 mmHg) to obtain ternary copolymer (3).

### Example 4

By the same procedures as those conducted in Example 1 except that 1,097 g of polyoxyalkylene compound (D) obtained in Synthesis Example 4, 28.8 g of sodium allylsulfonate, 29.4 g of maleic anhydride, 22.8 g potassium persulfate, and 785 g of water were used, polymerization was carried out to obtain an aqueous solution of ternary copolymer (4).

### Example 5

By the same procedures as those conducted in Example 3 except that 1,044 g of polyoxyalkylene compound (E) obtained in Synthesis Example 5, 108 g of sodium allylsulfonate, 245 g of maleic anhydride, 5.2 g of styrene, 14.5 g of benzoyl peroxide, and 200 g of acetonitrile were used, polymerization was carried out to obtain ternary copolymer (5).

### Example 6

In a flask of the same type as that used in Example 1, 990 g of polyoxyalkylene compound (F) obtained in Synthesis Example 6, 7.9 g of sodium methallylsulfonate, 78.4 g of maleic anhydride, 43 g of vinyl acetate, and 8.64 g of tert-butyl peroxy-2-ethylhexanoate were placed by weighing. The reaction was allowed to proceed under a nitrogen atmosphere at 80°C for 3 hours. The reaction mixture was then heated to 90°C, and the reaction was continued at this temperature for 5 hours to obtain ternary copolymer (6).

The amounts by mol of the monomers and the polymerization initiator and the type of the solvent used in the polymerization reaction in Examples 1 to 6 are shown together in Table 2.

**Table 2 - 1**

| | polyoxyalkylene compound | | sulfonic acid compound | | maleic acid monomer | |
|---|---|---|---|---|---|---|
| | No. | amount (mol) | type | amount (mol) | type | amount (mol) |
| Example 1 | (A) | 2.0 | NaAS | 2.0 | maleic acid | 4.2 |
| Example 2 | (B) | 1.5 | NaSS | 0.5 | Na maleate | 2.0 |
| Example 3 | (C) | 0.25 | NaAS | 0.5 | maleic anhydride | 1.0 |
| Example 4 | (D) | 0.2 | NaAS | 0.2 | maleic anhydride | 0.3 |
| Example 5 | (E) | 0.75 | NaAS | 0.75 | maleic anhydride | 2.5 |
| Example 6 | (F) | 1.0 | NaMS | 0.05 | maleic anhydride | 0.8 |

**Table 2 - 2**

| | other monomer | | polymerization initiator | | solvent |
|---|---|---|---|---|---|
| | type | amount (mol) | type | amount (mol) | |
| Example 1 | - | - | APS | 1.0 | water |
| Example 2 | - | - | PPS | 0.5 | water |
| Example 3 | - | - | AIBN | 0.02 | toluene |
| Example 4 | - | - | APS | 0.1 | water |
| Example 5 | styrene | 0.05 | BPO | 0.06 | acetonitrile |
| Example 6 | vinyl acetate | 0.5 | BPEH | 0.04 | not used |
| Notes: NaAS: sodium allylsulfonate; NaSS: sodium styrenesulfonate; NaMS: sodium methallylsulfonate; Na maleate: monosodium maleate; APS: ammonium persulfate; PPS: potassium persulfate; AIBN: N,N'-azobisisobutyronitrile; BPO: benzoyl peroxide; BPEH: tert-butyl peroxy-2-ethylhexanoate | | | | | |

The estimated skeleton structure, the weight-average molecular weight obtained by the GPC method, and the kinematic viscosity of obtained ternary copolymers (1) to (6) are shown in Table 3. The kinematic viscosity was measured by using a 60 % by weight aqueous solution for ternary copolymers (1), (2), and (4).

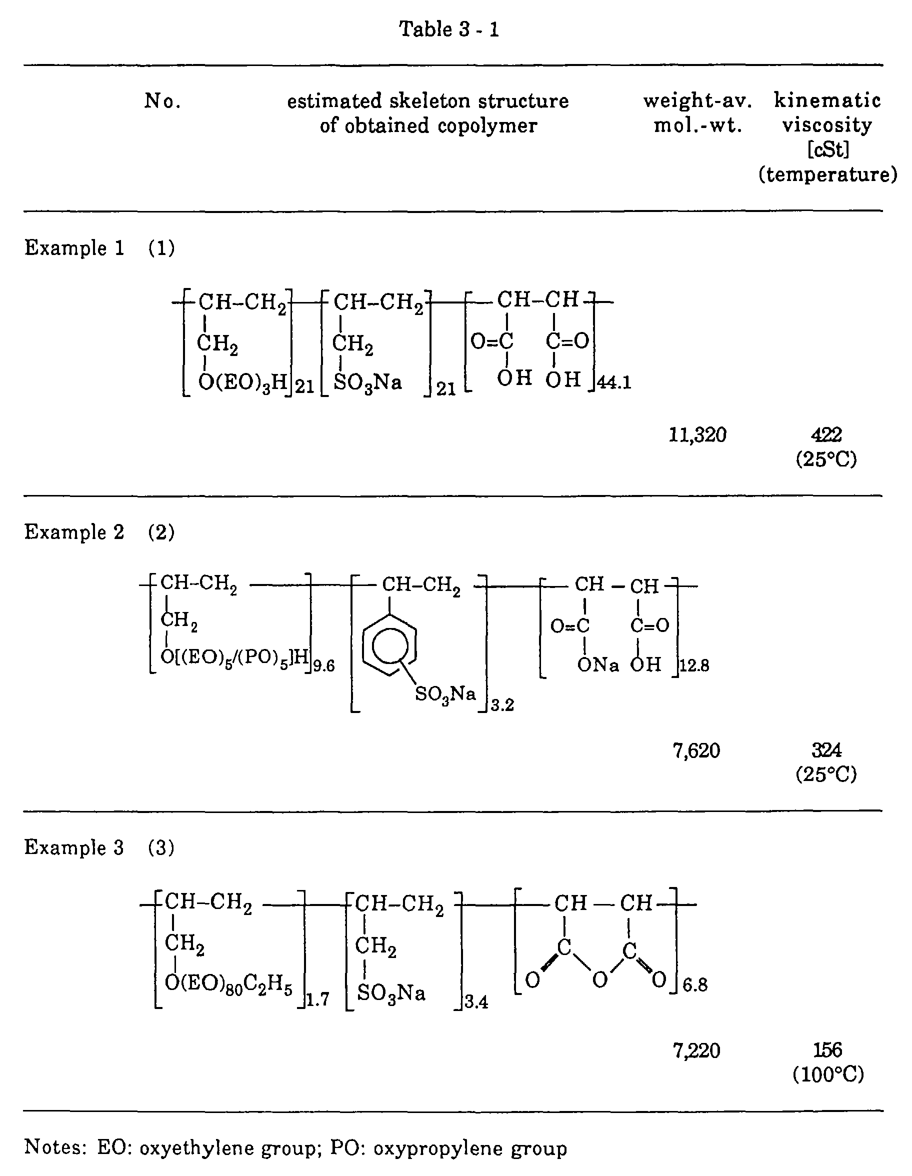

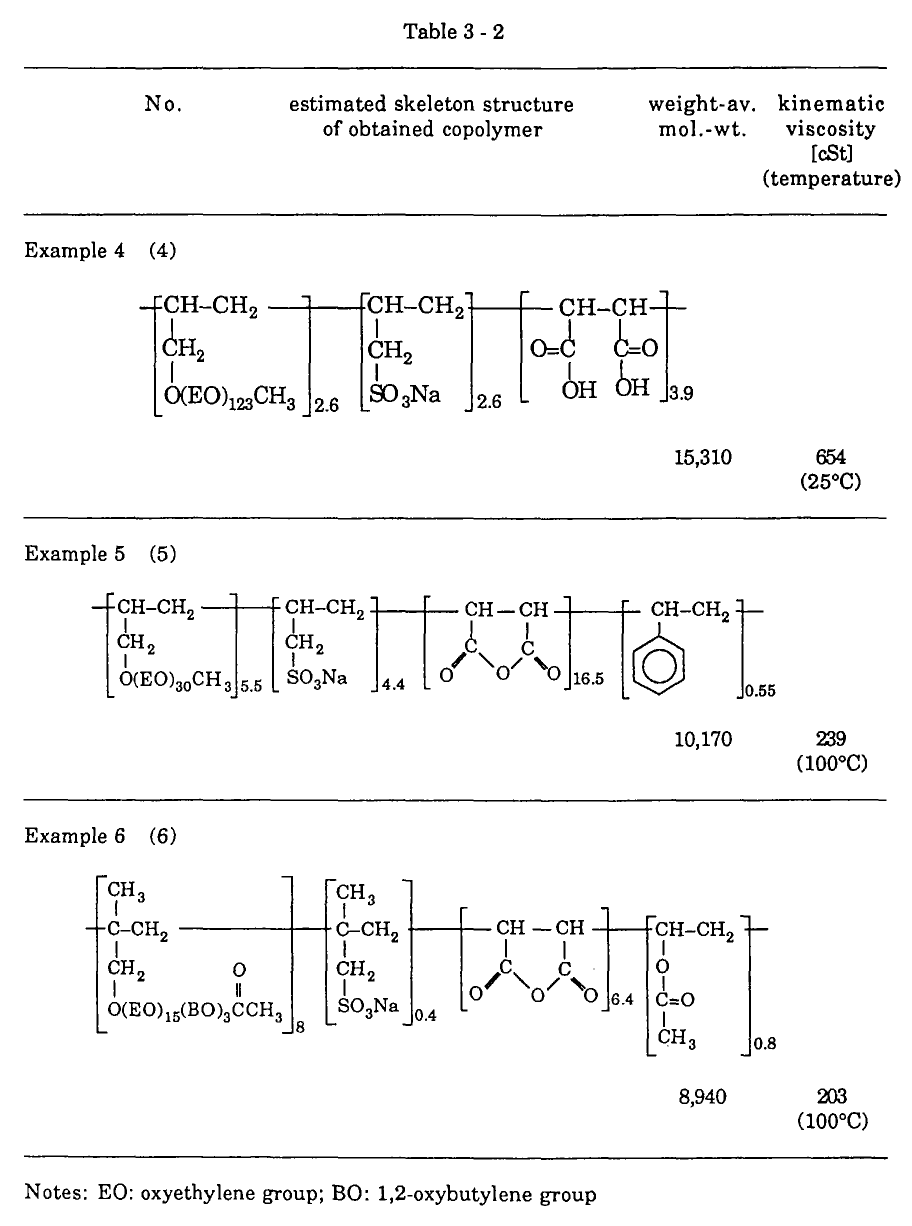

## Claims

1. A ternary copolymer which comprises, as essential monomer units,
(a) unit of a polyoxyalkylene compound represented by general formula [1]:
R¹O(AO)ₙR² [1]
(wherein R¹ represents an alkenyl group having 2 to 5 carbon atoms, R² represents hydrogen, a hydrocarbon group having 1 to 40 carbon atoms, or an acyl group having 2 to 18 carbon atoms, AO represents an oxyalkylene group having 2 to 18 carbon atoms, and n represents average number of added oxyalkylene group by mol which is 1 to 500),
(b) unit of a sulfonic acid compound represented by general formula [2]:
R³SO₃M¹ [2]
(wherein R³ represents an alkenyl group having 2 to 5 carbon atoms or an alkenylphenyl group having 8 or 9 carbon atoms, M¹ represents hydrogen, an alkali metal, an alkaline earth metal, or ammonium group which is unsubstituted or substituted with an organic group), and
(c) unit of a maleic acid compound selected from the group consisting of maleic anhydride, maleic acid, and salts of maleic acid;
contains essential monomer units (a), (b) and (c) in amounts satisfying a relation: {(a) + (b)} : (c) = 3 : 7 to 7 : 3 by mol, and a relation: (a) : (b) = 1 : 5 to 99 : 1 by mol; and
has a weight-average molecular weight of 500 to 100,000.

2. A ternary copolymer which is represented by general formula [3]; 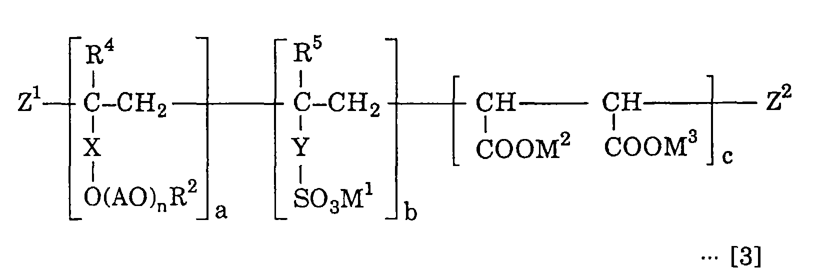 wherein R² represents hydrogen, a hydrocarbon group having 1 to 40 carbon atoms, or an acyl group having 2 to 18 carbon atoms, R⁴ and R⁵ represent each hydrogen or methyl group, AO represents an oxyalkylene group having 2 to 18 carbon atoms, n represents average number of added oxyalkylene group by mol which is 1 to 500, X represents a hydrocarbon group represented by CₘH₂ₘ wherein m represents a number of 0 to 3, Y represents a phenylene group or a hydrocarbon group represented by CₚH₂ₚ wherein p represents a number of 0 to 3, M¹, M², and M³ represent each hydrogen, an alkali metal, an alkaline earth metal, or ammonium group which is unsubstituted or substituted with an organic group, Z¹ and Z² represent each hydrogen or a residue group which is bonded to an end of the copolymer by initiation of polymerization or chain transfer, a, b, and c represent each number of respective constituting units by mol, a being 1 to 100, b being 1 to 100, and c being 1 to 100, the constituting units are bonded to each other in a random order, a, b and c satisfy a relation: {a + b} : c = 3 : 7 to 7 : 3 by mol, and a and b satisfy a relation: a : b = 1 : 5 to 99 : 1 by mol.

3. A ternary copolymer represented by general formula [4]: 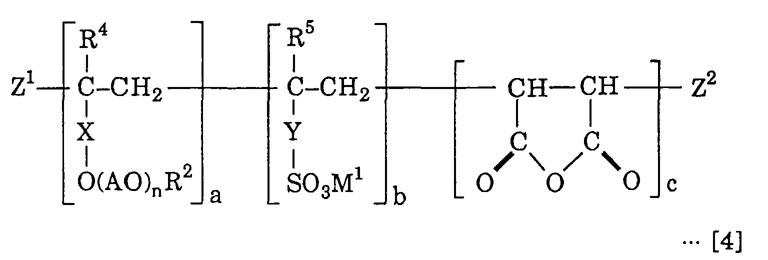 wherein R² represents hydrogen, a hydrocarbon group having 1 to 40 carbon atoms, or an acyl group having 2 to 18 carbon atoms, R⁴ and R⁵ represent each hydrogen or methyl group, AO represents an oxyalkylene group having 2 to 18 carbon atoms, n represents average number of added oxyalkylene group by mol which is 1 to 500, X represents a hydrocarbon group represented by CₘH₂ₘ wherein m represents a number of 0 to 3, Y represents a phenylene group or a hydrocarbon group represented by CₚH₂ₚ wherein p represents a number of 0 to 3, M¹ represents hydrogen, an alkali metal, an alkaline earth metal, or ammonium group which is unsubstituted or substituted with an organic group, Z¹ and Z² represent each hydrogen or a residue group which is bonded to an end of the copolymer by initiation of polymerization or chain transfer, a, b, and c represent each number of respective constituting units by mol, a being 1 to 100, b being 1 to 100, and c being 1 to 100, the constituting units are bonded to each other in a random order, a, b and c satisfy a relation: {a + b} : c = 3 : 7 to 7 : 3 by mol, and a and b satisfy a relation: a : b = 1 : 5 to 99 : 1 by mol.
